# FASCICULE DE BREVET EUROPEEN

(11) **EP 3 699 479 B1**
(45) Date de publication et mention de la délivrance du brevet: **10.01.2024**
(21) Numéro de dépôt: 20155384.9
(22) Date de dépôt: 04.02.2020
(51) Int. Cl.: F17C 13/04

(54) **DISPOSITIF DE FOURNITURE DE FLUIDE SOUS PRESSION ET BOUTEILLE(S) DE FLUIDE SOUS PRESSION COMPRENANT UN TEL DISPOSITIF**
LIEFERVORRICHTUNG FÜR EIN UNTER DRUCK STEHENDES FLUID, UND FLASCHE(N) FÜR UNTER DRUCK STEHENDES FLUID, DIE EINE SOLCHE VORRICHTUNG UMFASST/UMFASSEN
DEVICE FOR DELIVERING PRESSURISED FLUID AND BOTTLE(S) FOR PRESSURISED FLUID INCLUDING SUCH A DEVICE

(30) Priorité: 20.02.2019 FR 1901688
(43) Date de publication de la demande: 26.08.2020
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: FRENAL, Antoine, 78350 LES LOGES-EN-JOSAS (FR); PAOLI, Hervé, 78350 LES LOGES-EN-JOSAS (FR); FISCHER, Benjamin, 78350 LES LOGES-EN-JOSAS (FR)
(74) Mandataire: Air Liquide

(56) Documents cités:
- FR-A1- 2 892 799
- FR-A1- 2 991 750
- FR-A1- 3 033 388
- FR-A1- 3 056 278

## Description

L'invention concerne un dispositif de fourniture de fluide sous pression et une bouteille de fluide sous pression ou un ensemble de bouteilles de fluide sous pression muni d'un tel dispositif. L'invention concerne plus particulièrement un dispositif de fourniture de fluide sous pression, notamment de gaz sous pression, comprenant un premier robinet abritant un circuit interne de fluide, le dispositif comportant un second robinet comprenant un circuit interne et formant une entité physique distincte du premier robinet, le premier robinet et le second robinet comprenant des organes d'accrochages respectifs formant un système de connexion rapide male/femelle amovible du second robinet sur le premier robinet, les deux robinets étant configurés pour mettre en communication leurs circuits internes lorsque le second robinet est accroché sur le premier robinet via le système de connexion rapide, les circuits internes comprenant un ensemble de vanne(s) pour contrôler la circulation du fluide vers une sortie, le dispositif comprenant au moins un organe de commande mobile actionnable manuellement pour commander l'ensemble de vanne(s) et/ou le système de connexion rapide, le dispositif comprenant un organe de purge de l'un au moins des circuits internes, l'organe de purge étant en communication d'une part avec le ou les circuits internes et, d'autre part, avec une zone de décharge extérieure telle que l'atmosphère, l'organe de purge étant mobile entre un état fermé empêchant la purge du ou des circuit(s) interne(s) vers la zone de décharge et un état ouvert permettant la purge du ou des circuit (s) interne (s) vers la zone de décharge, l'organe de purge étant actionnable vers son état ouvert par le au moins un organe de commande.

L'invention concerne en particulier un dispositif comprenant un équipement qui se connecte sur le robinet d'une une bouteille de gaz sous pression à l'aide d'une connexion rapide.

Un tel dispositif est connu de FR2991750 A1.

La connectique rapide est soumise à la haute pression lorsque les circuits du robinet et de l'équipement sont sous haute pression (c'est-à-dire lorsque les circuits de soutirage/remplissage sont en relation avec la source de pression). Ainsi, pour des raisons techniques et de sécurité, la déconnexion de l'équipement par rapport au robinet auquel il se connecte n'est pas possible lorsque l'ensemble est sous pression. Il est nécessaire de prévoir une dépressurisation/purge de ces circuits étanches pour permettre la séparation physique des deux entités. En effet, même après fermeture des vannes/clapets des circuits, ces derniers contiennent du fluide à haute pression.

Une solution connue pour assurer cette purge/dépressurisation sans vider complètement la bouteille consiste à utiliser la sortie (aval) de l'équipement pour évacuer le gaz sous pression emprisonné dans le dispositif. Cette sortie aval peut se trouver relativement éloignée de la bouteille. Ceci oblige l'utilisateur à effectuer plusieurs aller/retour : fermer la bouteille, puis aller purger en bout de l'installation, revenir ensuite pour déconnecter l'équipement.

Une autre solution connue consiste à prévoir une vanne de purge indépendante du moyen de fermeture de l'emballage.

Ces deux solutions présentent l'inconvénient de permettre l'oubli de la fermeture de la bouteille au moment de la purge ce qui va vidanger complètement la bouteille.

Un but de la présente invention est de pallier tout ou partie des inconvénients de l'art antérieur relevés ci-dessus.

A cette fin, le dispositif selon l'invention, par ailleurs conforme à la définition générique qu'en donne le préambule ci-dessus, est défini par la revendication 1, l'organe de purge comprenant un clapet sollicité dans une position de fermeture contre un siège par un organe de rappel.

Par ailleurs, des modes de réalisation de l'invention peuvent comporter l'une ou plusieurs des caractéristiques suivantes :
- l'organe de purge est actionnable dans son état ouvert par le au moins un organe de commande lors d'un déplacement dudit organe de commande dans une position qui commande la fermeture d'au moins une vanne de l'ensemble de vanne(s) et/ou lors d'un déplacement de l'organe de commande dans une position qui commande un déverrouillage ou une séparation des organes d'accrochages respectifs du système de connexion rapide,
- l'organe de purge est actionné nécessairement et automatiquement dans son état ouvert par le au moins un organe de commande lors d'un déplacement de l'organe de commande mobile dans une position qui commande la fermeture d'au moins une vanne de l'ensemble de vanne(s) et/ou lors d'un déplacement de l'organe de commande mobile dans une position qui commande un déverrouillage ou une séparation des organes d'accrochages respectifs du système de connexion rapide,
- le au moins un organe de commande susceptible d'actionner l'organe de purge comprend un bouton ou levier mobile en translation et/ou en rotation pour commander l'ouverture/la fermeture d'au moins une vanne du circuit interne du premier robinet et/ou du second robinet,
- le au moins un organe de commande susceptible d'actionner l'organe de purge comprend un organe mobile en translation et/ou en rotation pour commander le verrouillage/le déverrouillage de la liaison mécanique des organes d'accrochages du système de connexion rapide,
- le circuit interne du premier robinet s'étend entre une première extrémité amont destinée à être en communication avec une source de fluide sous pression et une extrémité aval, le circuit interne du premier robinet comprenant un clapet d'isolation permettant d'ouvrir ou de fermer le circuit interne, le second robinet étant muni d'un circuit interne de fluide comprenant une extrémité amont destinée à être en communication l'extrémité aval du circuit interne du premier robinet lorsque le second robinet est accroché sur le premier robinet et une extrémité aval de sortie destinée à être raccordée avec un appareil utilisateur du fluide, le second robinet comprenant un organe mobile d'actionnement du clapet d'isolation du premier robinet pour commander l'ouverture ou la fermeture de ce dernier,
- le déplacement de l'organe mobile d'actionnement du clapet d'isolation du premier robinet est commandé par le au moins un organe de commande,
- le dispositif comporte un organe de verrouillage/déverrouillage de la liaison mécanique des organes d'accrochages du système de connexion rapide, l'organe de verrouillage/déverrouillage étant mobile relativement au premier et second robinets entre une première position de verrouillage et une seconde position de déverrouillage, dans la première position de verrouillage l'organe de verrouillage empêchant, lorsque les deux robinets sont accrochés, la séparation du second robinet par rapport au premier robinet, dans la seconde position de déverrouillage l'organe de verrouillage/déverrouillage permettant, lorsque les deux robinets sont accrochés, la séparation du second robinet par rapport au premier robinet, ledit organe de verrouillage/déverrouillage constituant un organe de commande actionnant l'organe de purge, l'organe de purge étant actionné dans son état ouvert au cours du déplacement de l'organe de verrouillage/déverrouillage de sa première position vers sa seconde position et/ou lorsque l'organe de verrouillage/déverrouillage atteint sa seconde position,
- l'organe de purge est actionnable par l'organe de verrouillage/déverrouillage par contact mécanique,
- le au moins un organe de commande comprend un levier pivotant et en ce que l'organe de purge est actionnable par contact mécanique avec une portion dudit levier,
- l'organe de purge est actionnable par le levier dans sa course entre deux positions de commande déterminées de l'ensemble de vanne(s),
- l'organe de purge est actionnable par le levier lorsque le levier est déplacé au-delà de sa course entre deux positions de commande déterminées de l'ensemble de vanne(s).
- le système de connexion rapide assure un blocage mécanique du second robinet sur le premier robinet au moins selon un axe (A) longitudinal,
- le premier robinet comprend une extrémité de forme cylindrique s'étendant selon un axe longitudinal, le système de connexion rapide comprenant au moins une gorge ou nervure formée sur l'extrémité cylindrique du premier robinet et un système à griffes ou billes d'accrochage solidaire du second robinet et coopérant avec la au moins une gorge ou nervure formée sur l'extrémité cylindrique du premier robinet,
- le circuit interne du second robinet comprend une extrémité aval munie d'un raccord de sortie débouchant sur la surface périphérique du second robinet,
- le dispositif comprend une bouteille de fluide sous pression sur laquelle est raccordé le premier robinet, le dispositif comprenant en outre un chapeau de protection du premier robinet fixe rigidement a la bouteille,
- en position raccordée du second robinet sur le premier robinet, le système de connexion rapide autorisant une rotation du second robinet sur le premier robinet autour de l'axe longitudinal et par rapport au chapeau.

L'invention concerne également une bouteille de fluide sous pression ou ensemble de bouteilles de fluide sous pression muni d'un dispositif selon l'une quelconque des caractéristiques précédentes ou ci-après.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :
[Fig. 1] représente une vue en coupe, schématique et partielle, illustrant un exemple de réalisation d'un dispositif de fourniture de fluide dans un état déconnecté ou séparé,
[Fig. 2] représente une vue en coupe, schématique et partielle, illustrant une configurations d'utilisation d'un dispositif de fourniture de fluide dans un état accroché et déverrouillé,
[Fig. 3] représente une vue similaire à celle de la figure 2 une configuration d'utilisation du dispositif (verrouillé),
[Fig. 4] représente une vue schématique et partielle d'un détail du dispositif illustrant un exemple de structure et de fonctionnement d'un système de purge du dispositif,
[Fig. 5] représente une vue schématique et partielle d'un détail du dispositif illustrant un autre exemple de structure et de fonctionnement d'un système de purge du dispositif,
[Fig. 6] représente une vue schématique et partielle d'un détail du dispositif illustrant un autre exemple de structure et de fonctionnement d'un système de purge du dispositif.

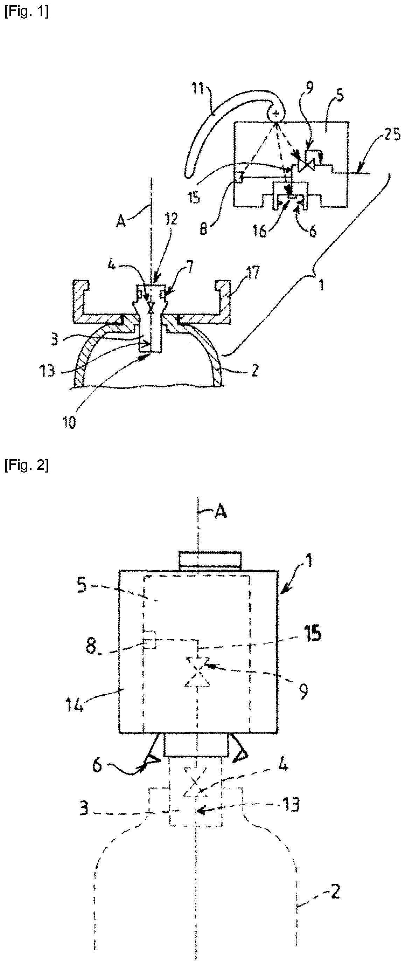

La figure 1 représente un dispositif 1 de fourniture de fluide sous pression, notamment de gaz sous pression, comprenant un premier robinet 3 monté dans l'orifice d'un réservoir 2 et entouré d'un chapeau 17 de protection.

Le premier robinet 3 abrite un circuit 13 interne de fluide muni d'au moins d'un organe 4 d'isolation permettant d'ouvrir ou de fermer le circuit 13 interne. L'organe 4 d'isolement est par exemple un clapet ou une vanne.

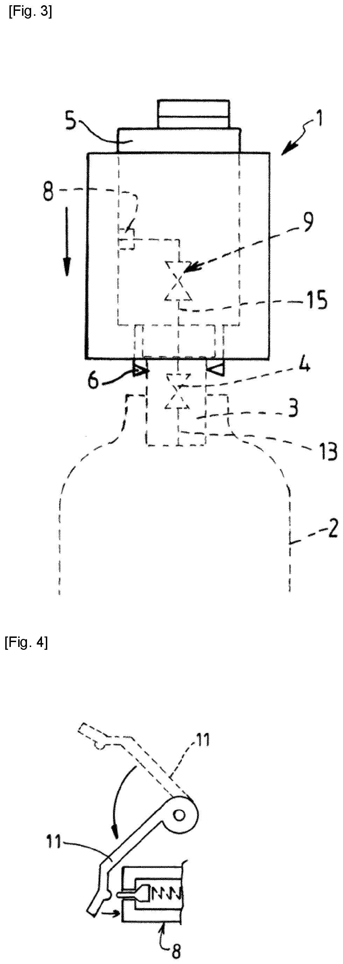

Le dispositif 1 comprend un second robinet 5 formant une entité physique distincte (séparable) du premier robinet 3 (et en position déconnectée à la [Fig. 1] et en position connectée/accroché aux [Fig. 2] et [Fig. 3]).

Le second robinet 5 est muni d'un circuit 15 interne de fluide comprenant une première extrémité amont destinée à venir se raccorder fluidiquement à une extrémité aval 12 du circuit 13 interne du premier 3 robinet.

Le circuit 13 interne du second robinet 5 comprend par exemple au moins un organe 9 de contrôle du flux de fluide (par exemple un détendeur fixe ou réglable et/ou un régulateur de débit et/ou un clapet de pression résiduelle (RPV) et/ou un Clapet anti-retour (NRV) et/ou tout autre organe approprié, orifice calibré...). Le second 5 robinet comprend de préférence également un organe 16 mobile d'actionnement de l'organe 4 d'isolation du premier robinet 3 pour commander l'ouverture ou la fermeture de ce dernier. Par exemple, l'organe 16 mobile d'actionnement comprend un pousse-clapet commandé par un organe 11 de commande manuel porté par le second 5 robinet (un levier 11 dans cet exemple mais pourrait comprendre un bouton poussoir, un volant ou tout autre organe approprié). Le levier 11 peut commander le cas échéant l'organe 9 de contrôle du flux de fluide.

Le premier 3 robinet et le second 5 robinet comprenant des organes 6, 7 d'accrochages respectifs formant un système de connexion/accrochage rapide mâle/femelle amovible du second robinet 5 sur le premier 3 robinet.

Par exemple, le premier 3 robinet comprend une extrémité terminale de forme cylindrique s'étendant selon un axe A longitudinal central sur laquelle se raccorde le second robinet 5. Le système de connexion rapide peut comprendre au moins une gorge 7 ou nervure formée sur l'extrémité cylindrique du premier robinet 3 et un système a griffes 6, billes (ou tout élément d'accrochage équivalent approprié) solidaire du second robinet 5.

Le ou les éléments 6 d'accrochage du second robinet 5 sont de préférence mobiles et peuvent être verrouillés/déverrouillés par exemple un organe 14 de verrouillage mobile sur le second robinet 5 (cf. [Fig. 2] et [Fig. 3]). Le ou les éléments 6 d'accrochage du second robinet 5 coopèrent avec le au moins une gorge ou nervure 7 formée sur l'extrémité cylindrique du premier robinet 3.

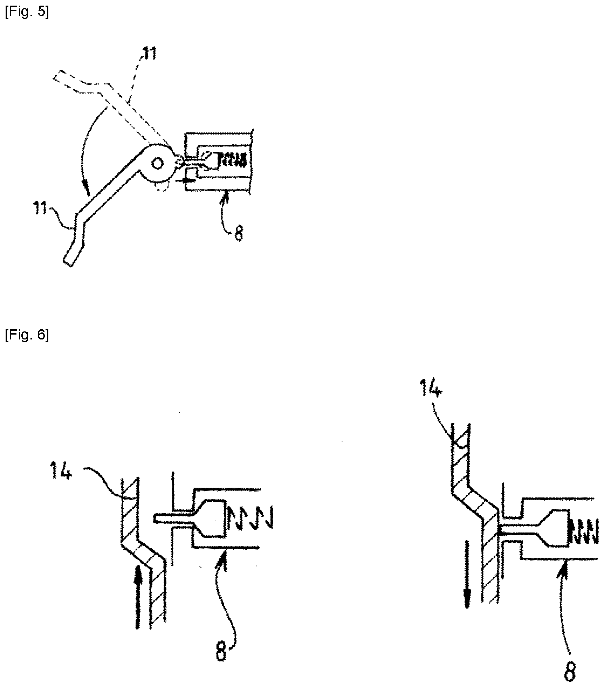

Le dispositif 1 comprend un organe 8 de purge de l'un au moins des circuits 13, 15 internes. Par exemple, comme représenté aux [Fig. 1], [Fig. 4], [Fig. 5] et [Fig. 6], l'organe 8 de purge peut comprendre un clapet sollicité dans une position de fermeture contre un siège par un organe de rappel. L'organe 8 de purge est par exemple situé sur le second robinet 5 et est en communication d'une part avec le circuit 15 interne et, d'autre part, avec une zone de décharge extérieure telle que l'atmosphère (l'extérieur). Cet organe 8 de purge est mobile entre un état fermé empêchant la purge des circuits 13, 15 internes vers la zone de décharge et un état ouvert permettant la purge des circuits internes 13 vers la zone de décharge.

Selon une particularité avantageuse, l'organe 8 de purge est actionnable dans son état ouvert par le au moins un organe 11, 14 de commande (levier 11 et/ou l'organe 14 de verrouillage/déverrouillage).

De préférence, l'organe 8 de purge est distinct de l'ensemble de vanne(s) 4, 9 qui régulent/contrôlent le transit de fluide entre les deux extrémités 10, 25 des circuits. C'est-à-dire que l'organe 8 de purge est un clapet de dépressurisation distinct des clapets qui régulent le soutirage normal vers la sortie 25 du second robinet 5.

En particulier, l'organe 8 de purge peut être localisé en amont ou en aval de l'organe 9 de contrôle (lorsqu'il y en a un) en fonction des avantages et inconvénients fonctionnelles de l'application.

L'organe 8 de purge peut être actionnable/actionné dans son état ouvert par le levier 11 lors d'un déplacement dudit levier 11 vers une position qui commande la fermeture d'au moins une vanne 4 de l'ensemble de vanne(s).

De même (alternativement ou cumulativement), l'organe 8 de purge peut être actionnable/actionné dans son état ouvert par l'organe 14 de verrouillage lors d'un déplacement de cet organe 14 de verrouillage dans une position qui commande un déverrouillage des organes 6, 7 d'accrochages respectifs du système de connexion rapide (la [Fig. 2] illustre une position de déverrouillage tandis que la [Fig. 3] illustrent une position de verrouillage). Par exemple, le dispositif peut être configuré pour que l'organe 8 de purge soit actionné nécessairement et automatiquement dans son état ouvert par le levier 11 lors d'un déplacement du levier 11 pour commander la fermeture d'au moins une vanne 4 de l'ensemble de vanne (s) . Ceci est illustré à la [Fig. 5] ou le déplacement du levier 11 de la position d'ouverture (levier 11 en haut en pointillés sur la figure par exemple) vers la position de fermeture des circuits (levier en bas sur la [Fig. 5] par exemple) passe nécessairement par une position intermédiaire (de préférence proche ou confondue avec la position de fermeture) dans laquelle l'organe 8 de purge est ouvert. Comme illustré à la [Fig. 5] ceci peut être obtenu via une coopération entre le levier 11 (une portion du levier 11 telle qu'une extrémité pivotante en forme de came) et une extrémité de l'organe de purge. Ceci provoque une ouverture au moins ponctuelle de l'organe de purge 8 suffisante pour faire baisser la pression dans les circuits 15, 13 internes.

Dans une autre configuration possible, (cf. [Fig. 4]), l'organe 8 de purge est actionnable par le levier 11 lorsque le levier 11 est déplacé au-delà de sa course entre deux positions de commande déterminées de l'ensemble de vanne(s). Par exemple, au-delà de sa position normale de fermeture (vers le bas dans l'exemple de la [Fig. 5]), le levier peut être encore déplacé (poussé par exemple) pour pousser/actionner l'organe 8 de commande dans son état d'ouverture).

De même (alternativement ou cumulativement), le dispositif peut être configuré pour que l'organe 8 de purge soit actionné nécessairement et automatiquement dans son état ouvert par l'organe 14 de verrouillage lors d'un déplacement de l'organe 14 de verrouillage.

Comme illustré à la [Fig. 6] lorsque l'organe 14 de verrouillage est déplacé de sa position de verrouillage (à gauche sur la [Fig. 6]) vers sa position de déverrouillage (à droite sur le [Fig. 6]), cet organe 14 de verrouillage actionne également au moins ponctuellement l'organe 8 de purge en ouverture. Dans cet exemple l'organe 14 de verrouillage est mobile en translation sur le second robinet 5.

Ainsi, cette purge peut être obtenue uniquement lorsque le levier 11 est en position de fermeture du circuit 15, 13 (course supplémentaire après la position de fermeture tel qu'illustré à la [Fig. 4], c'est-à-dire poussée en sens inverse du déplacement vers la position d'ouverture). Cette purge nécessite une action volontaire de l'utilisateur.

De même, la purge peut être « automatique » et incluse dans le mouvement de fermeture d'un clapet du circuit 13, 15 (cf. la réalisation de la [Fig. 5]).

Enfin, cette purge « automatique » peut également être incluse dans le mouvement de déconnection (cf. la réalisation de [Fig. 6] : en déplaçant l'organe 14 de verrouillage pour déverrouiller la liaison des deux robinets 3, 5, l'utilisateur actionne automatiquement l'organe 8 de purge).

Ces solutions assurent une purge efficace sans risquer une vidange complète de la bouteille 2.

Comme détaillé dans le document FR3054291A1, le système de connexion rapide peut être configuré (par exemple, jeu, débattements...) de sorte que lorsque la pression de fluide dans les circuits 13, 15 des deux robinets 3, 5 raccordés excède un niveau de pression déterminé (circuit ouvert), le système de connexion rapide 6, 7 subit un effort qui tend à limiter ou empêcher la rotation relative du second robinet 5 sur le premier 3 robinet. Par exemple, la rotation n'est permise que lorsque le circuit 15 interne du second robinet 5 n'est pas sous pression (clapet(s) fermés, et circuit purgé).

## Revendications

1. Dispositif de fourniture de fluide sous pression, notamment de gaz sous pression, comprenant un premier robinet (3) abritant un circuit (13) interne de fluide, le dispositif (1) comportant un second robinet (5) comprenant un circuit (15) interne et formant une entité physique distincte du premier robinet (3), le premier (3) robinet et le second (5) robinet comprenant des organes (6, 7) d'accrochages respectifs formant un système de connexion rapide male/femelle amovible du second robinet (5) sur le premier (3) robinet, les deux robinets (3, 5) étant configurés pour mettre en communication leurs circuits internes (13, 15) lorsque le second robinet (5) est accroché sur le premier robinet (3) via le système de connexion rapide, les circuits (13, 15) internes comprenant un ensemble de vanne(s) (4, 9) pour contrôler la circulation du fluide vers une sortie (25), le dispositif (1) comprenant au moins un organe (11, 14) de commande mobile actionnable manuellement pour commander l'ensemble de vanne(s) et/ou le système de connexion rapide, le dispositif comprenant un organe (8) de purge de l'un au moins des circuits (13, 15) internes, l'organe (8) de purge étant en communication d'une part avec le ou les circuits (13, 15) internes et, d'autre part, avec une zone de décharge extérieure telle que l'atmosphère, l'organe (8) de purge étant mobile entre un état fermé empêchant la purge du ou des circuit(s) (13, 15) interne (s) vers la zone de décharge et un état ouvert permettant la purge du ou des circuit(s) interne(s) (13) vers la zone de décharge, l'organe (8) de purge étant actionnable dans son état ouvert par le au moins un organe (11, 14) de commande **caractérisé en ce que** l'organe (8) de purge comprend un clapet sollicité vers une position de fermeture contre un siège par un organe de rappel.

2. Dispositif selon la revendication 1, **caractérisé en ce que** l'organe (8) de purge est actionnable dans son état ouvert par le au moins un organe (11, 14) de commande lors d'un déplacement dudit organe (11, 14) de commande vers une position qui commande la fermeture d'au moins une vanne (4) de l'ensemble de vanne (s) et/ou lors d'un déplacement de l'organe (11, 14) de commande dans une position qui commande un déverrouillage ou une séparation des organes (6, 7) d'accrochages respectifs du système de connexion rapide.

3. Dispositif selon la revendication 1 ou 2, **caractérisé en ce que** l'organe (8) de purge est actionné nécessairement et automatiquement dans son état ouvert par le au moins un organe (11, 14) de commande lors d'un déplacement de l'organe (11, 14) de commande mobile dans une position qui commande la fermeture d'au moins une vanne de l'ensemble de vanne(s) et/ou lors d'un déplacement de l'organe (11, 14) de commande mobile dans une position qui commande un déverrouillage ou une séparation des organes (6, 7) d'accrochages respectifs du système de connexion rapide.

4. Dispositif selon l'une quelconque des revendications 1 à 3, **caractérisé en ce que** le au moins un organe (11, 14) de commande susceptible d'actionner l'organe (8) de purge comprend un bouton ou levier (11) mobile en translation et/ou en rotation pour commander l'ouverture/la fermeture d'au moins une vanne (4, 9) du circuit interne (13) du premier robinet (3) et/ou du second robinet (5).

5. Dispositif selon l'une quelconque des revendications 1 à 4, **caractérisé en ce que** le au moins un organe (11, 14) de commande susceptible d'actionner l'organe (8) de purge comprend un organe (14) mobile en translation et/ou en rotation pour commander le verrouillage/le déverrouillage de la liaison mécanique des organes (6, 7) d'accrochages du système de connexion rapide.

6. Dispositif selon l'une quelconque des revendications 1 à 5, **caractérisé en ce que** le circuit (13) interne du premier robinet (3) s'étend entre une première extrémité (10) amont destinée à être en communication avec une source (2) de fluide sous pression et une extrémité aval (12), le circuit (13) interne du premier robinet (3) comprenant un clapet (4) d'isolation permettant d'ouvrir ou de fermer le circuit (13) interne, le second robinet (5) étant muni d'un circuit (15) interne de fluide comprenant une extrémité amont destinée à être en communication l'extrémité aval du circuit interne (13) du premier robinet (3) lorsque le second robinet (5) est accroché sur le premier robinet (3) et une extrémité aval (25) de sortie destinée à être raccordée avec un appareil utilisateur du fluide, le second robinet (5) comprenant un organe (16) mobile d'actionnement du clapet (4) d'isolation du premier robinet (3) pour commander l'ouverture ou la fermeture de ce dernier.

7. Dispositif selon la revendication 6, **caractérisé en ce que** le déplacement de l'organe (16) mobile d'actionnement du clapet (4) d'isolation du premier robinet (3) est commandé par le au moins un organe (11, 14) de commande.

8. Dispositif selon l'une quelconque des revendications 1 à 7, **caractérisé en ce qu'**il comporte un organe (14) de verrouillage/déverrouillage de la liaison mécanique des organes (6, 7) d'accrochages du système de connexion rapide, l'organe (14) de verrouillage/déverrouillage étant mobile relativement au premier et second robinets (3, 5) entre une première position de verrouillage et une seconde position de déverrouillage, dans la première position de verrouillage l'organe (14) de verrouillage empêchant, lorsque les deux robinets (3, 5) sont accrochés, la séparation du second (5) robinet par rapport au premier robinet, dans la seconde position de déverrouillage l'organe (14) de verrouillage/déverrouillage permettant, lorsque les deux robinets (3, 5) sont accrochés, la séparation du second (5) robinet par rapport au premier robinet (3), ledit organe (14) de verrouillage/déverrouillage constituant un organe (11, 14) de commande actionnant l'organe (8) de purge, l'organe (8) de purge étant actionné dans son état ouvert au cours du déplacement de l'organe (14) de verrouillage/déverrouillage de sa première position vers sa seconde position et/ou lorsque l'organe (14) de verrouillage/déverrouillage atteint sa seconde position.

9. Dispositif selon la revendication 8, **caractérisé en ce que** l'organe (8) de purge est actionnable par l'organe (14) de verrouillage/déverrouillage par contact mécanique.

10. Dispositif selon l'une quelconque des revendications 1 à 9, **caractérisé en ce que** le au moins un organe (11, 14) de commande comprend un levier (11) pivotant et **en ce que** l'organe (8) de purge est actionnable par contact mécanique avec une portion dudit levier (11).

11. Dispositif selon la revendication 10, **caractérisé en ce que** l'organe (8) de purge est actionnable par le levier (11) dans sa course entre deux positions de commande déterminées de l'ensemble de vanne(s).

12. Dispositif selon la revendication 10 ou 11, **caractérisé en ce que** l'organe (8) de purge est actionnable par le levier (11) lorsque le levier (11) est déplacé au-delà de sa course entre deux positions de commande déterminées de l'ensemble de vanne(s).

13. Bouteille de fluide sous pression ou ensemble de bouteilles de fluide sous pression muni d'un dispositif selon l'une quelconque des revendication 1 à 12.

## Patentansprüche

1. Vorrichtung zur Abgabe von unter Druck stehendem Fluid, insbesondere von unter Druck stehendem Gas, die einen ersten Hahn (3) umfasst, der einen internen Fluidkreis (13) aufnimmt, wobei die Vorrichtung (1) einen zweiten Hahn (5) aufweist, der einen internen Kreis (15) umfasst und eine physische Einheit bildet, die von dem ersten Hahn (3) verschieden ist, wobei der erste (3) Hahn und der zweite (5) Hahn jeweilige Kupplungselemente (6, 7) umfassen, die ein lösbares Männchen/Weibchen-Schnellanschlusssystem zum Anschließen des zweiten (5) Hahns an den ersten (3) Hahn bilden, wobei die beiden Hähne (3, 5) dazu ausgestaltet sind, ihre internen Kreise (13, 15) in Verbindung zu bringen, wenn der zweite Hahn (5) über das Schnellanschlusssystem an den ersten Hahn (3) gekuppelt ist, wobei die internen Kreise (13, 15) eine Anordnung aus einem oder mehreren Ventil(en) (4, 9) umfassen, um die Zirkulation des Fluids zu einem Auslass (25) hin zu kontrollieren, wobei die Vorrichtung (1) mindestens ein manuell betätigbares bewegliches Steuerelement (11, 14) umfasst, um die Anordnung aus einem oder mehreren Ventil(en) und/oder das Schnellanschlusssystem zu steuern, wobei die Vorrichtung ein Entlüftungselement (8) zum Entlüften mindestens eines der internen Kreise (13, 15) umfasst, wobei das Entlüftungselement (8) zum einen mit dem oder den internen Kreisen (13, 15) und zum anderen mit einem externen Entlastungsbereich wie der Atmosphäre in Verbindung steht, wobei das Entlüftungselement (8) zwischen einem geschlossenen Zustand, der das Entlüften des oder der internen Kreise(s) (13, 15) zu dem Entlastungsbereich hin verhindert, und einem geöffneten Zustand, der das Entlüften des oder der internen Kreise(s) zu dem Entlastungsbereich hin ermöglicht, beweglich ist, wobei das Entlüftungselement (8) in seinem geöffneten Zustand durch das mindestens eine Steuerelement (11, 14) betätigbar ist, **dadurch gekennzeichnet, dass** das Entlüftungselement (8) ein Ventil umfasst, das von einem Rückstellelement zu einer Schließstellung hin gegen einen Sitz gedrückt wird.

2. Vorrichtung nach Anspruch 1, **dadurch gekennzeichnet, dass** das Entlüftungselement (8) in seinem geöffneten Zustand durch das mindestens eine Steuerelement (11, 14) betätigbar ist bei einer Verlagerung des Steuerelements (11, 14) zu einer Stellung hin, die das Schließen mindestens eines Ventils (4) der Anordnung aus einem oder mehreren Ventil(en) steuert, und/oder bei einer Verlagerung des Steuerelements (11, 14) in eine Stellung, die eine Entriegelung oder eine Trennung der jeweiligen Kupplungselemente (6, 7) des Schnellanschlusssystems steuert.

3. Vorrichtung nach Anspruch 1 oder 2, **dadurch gekennzeichnet, dass** das Entlüftungselement in seinem geöffneten Zustand (8) notwendigerweise und automatisch durch das mindestens eine Steuerelement (11, 14) betätigt wird bei einer Verlagerung des beweglichen Steuerelements (11, 14) in eine Stellung, die das Schließen mindestens eines Ventils (4) der Anordnung aus einem oder mehreren Ventil(en) steuert, und/oder bei einer Verlagerung des beweglichen Steuerelements (11, 14) in eine Stellung, die eine Entriegelung oder eine Trennung der jeweiligen Kupplungselemente (6, 7) des Schnellanschlusssystems steuert.

4. Vorrichtung nach einem der Ansprüche 1 bis 3, **dadurch gekennzeichnet, dass** das mindestens eine Steuerelement (11, 14), das geeignet ist, das Entlüftungselement (8) zu betätigen, einen translatorisch und/oder rotatorisch beweglichen Knopf oder Hebel (11) umfasst, um das Öffnen/das Schließen mindestens eines Ventils (4, 9) des internen Kreises (13) des ersten Hahns (3) und/oder des zweiten Hahns (5) zu steuern.

5. Vorrichtung nach einem der Ansprüche 1 bis 4, **dadurch gekennzeichnet, dass** das mindestens eine Steuerelement (11, 14), das geeignet ist, das Entlüftungselement (8) zu betätigen, ein translatorisch und/oder rotatorisch bewegliches Element (14) umfasst, um das Verriegeln/das Entriegeln der mechanischen Verbindung der Kupplungselemente (6, 7) des Schnellanschlusssystems zu steuern.

6. Vorrichtung nach einem der Ansprüche 1 bis 5, **dadurch gekennzeichnet, dass** sich der interne Kreis (13) des ersten Hahns (3) zwischen einem ersten stromaufwärtigen Ende (10), das dazu bestimmt ist, mit einer Quelle (2) für unter Druck stehendes Fluid in Verbindung zu stehen, und einem stromabwärtigen Ende (12) erstreckt, wobei der interne Kreis (13) des ersten Hahns (3) ein Absperrventil (4) umfasst, das es ermöglicht, den internen Kreis (13) zu öffnen oder zu schließen, wobei der zweite Hahn (5) mit einem internen Fluidkreis (15) versehen ist, der ein stromaufwärtiges Ende, das dazu bestimmt ist, mit dem stromabwärtigen Ende des internen Kreises (13) des ersten Hahns (3) in Verbindung zu stehen, wenn der zweite Hahn (5) an den ersten Hahn (3) gekuppelt ist, und ein stromabwärtiges Auslassende (25), das dazu bestimmt ist, mit einem Fluidverbrauchergerät verbunden zu werden, umfasst, wobei der zweite Hahn (5) ein bewegliches Betätigungselement (16) zur Betätigung des Absperrventils (4) des ersten Hahns (3) umfasst, um das Öffnen oder Schließen von Letzterem zu steuern.

7. Vorrichtung nach Anspruch 6, **dadurch gekennzeichnet, dass** die Verlagerung des beweglichen Betätigungselements (16) zur Betätigung des Absperrventils (4) des ersten Hahns (3) durch das mindestens eine Steuerelement (11, 14) gesteuert wird.

8. Vorrichtung nach einem der Ansprüche 1 bis 7, **dadurch gekennzeichnet, dass** es ein Verriegelungs-/Entriegelungselement (14) für die mechanische Verbindung der Kupplungselemente (6, 7) des Schnellanschlusssystems aufweist, wobei das Verriegelungs-/Entriegelungselement (14) relativ zu den ersten und zweiten Hähnen (3, 5) zwischen einer ersten Verriegelungsstellung und einer zweiten Entriegelungsstellung beweglich ist, wobei das Verriegelungselement (14) in der ersten Verriegelungsstellung, wenn die beiden Hähne (3, 5) gekuppelt sind, das Trennen des zweiten (5) Hahns in Bezug auf den ersten Hahn verhindert, wobei das Verriegelungs-/Entriegelungselement (14) in der zweiten Entriegelungsstellung, wenn die beiden Hähne (3, 5) gekuppelt sind, das Trennen des zweiten (5) Hahns in Bezug auf den ersten Hahn (3) ermöglicht, wobei das Verriegelungs-/Entriegelungselement (14) ein Steuerelement (11, 14) darstellt, welches das Entlüftungselement (8) betätigt, wobei das Entlüftungselement (8) in einem geöffneten Zustand betätigt wird während der Verlagerung des Verriegelungs-/Entriegelungselements (14) hin zu seiner zweiten Stellung und/oder wenn das Verriegelungs-/Entriegelungselement (14) seine zweite Stellung erreicht.

9. Vorrichtung nach Anspruch 8, **dadurch gekennzeichnet, dass** das Entlüftungselement (8) durch das Verriegelungs-/Entriegelungselement (14) durch mechanischen Kontakt betätigbar ist.

10. Vorrichtung nach einem der Ansprüche 1 bis 9, **dadurch gekennzeichnet, dass** das mindestens eine Steuerelement (11, 14) einen schwenkbaren Hebel (11) umfasst und dass das Entlüftungselement (8) durch mechanischen Kontakt mit einem Abschnitt des Hebels (11) betätigbar ist.

11. Vorrichtung nach Anspruch 10, **dadurch gekennzeichnet, dass** das Entlüftungselement (7) durch den Hebel (11) auf seinem Weg zwischen zwei bestimmten Steuerstellungen der Anordnung aus einem oder mehreren Ventil(en) betätigbar ist.

12. Vorrichtung nach Anspruch 10 oder 11, **dadurch gekennzeichnet, dass** das Entlüftungselement (7) durch den Hebel (11) betätigbar ist, wenn der Hebel (11) über seinen Weg zwischen zwei bestimmten Steuerstellungen der Anordnung aus einem oder mehreren Ventil(en) hinaus verlagert wird.

13. Flasche für ein unter Druck stehendes Fluid oder Anordnung aus Flaschen für ein unter Druck stehendes Fluid, die mit einer Vorrichtung nach einem der Ansprüche 1 bis 12 versehen ist.

## Claims

1. Device for supplying pressurized fluid, notably pressurized gas, comprising a first valve (3) housing an internal fluid circuit (13), the device (1) comprising a second valve (5) comprising an internal circuit (15) and forming a physical entity distinct from the first valve (3), the first valve (3) and the second valve (5) comprising respective coupling members (6, 7) forming a detachable male/female quick-connection system for the second valve (5) on the first valve (3), the two valves (3, 5) being configured so as to place their internal circuits (13, 15) in communication when the second valve (5) is coupled to the first valve (3) via the quick-connection system, the internal circuits (13, 15) comprising an array of control valve (s) (4, 9) for controlling the circulation of the fluid towards an outlet (25), the device (1) comprising at least one manually actuatable movable command member (11, 14) for commanding the array of control valve(s) and/or the quick-connection system, the device comprising a member (8) for purging at least one of the internal circuits (13, 15), the purge member (8) being in communication with the internal circuit or circuits (13, 15) on the one hand and with an exterior discharge zone, such as the atmosphere, on the other hand, the purge member (8) being movable between a closed state preventing purging of the internal circuit or circuits (13, 15) towards the discharge zone and an open state allowing purging of the internal circuit or circuits (13) towards the discharge zone, the purge member (8) being able to be actuated to its open state by the at least one command member (11, 14), **characterized in that** the purge member (8) comprises a check valve urged towards a closure position against a seat by a return member.

2. Device according to Claim 1, **characterized in that** the purge member (8) can be actuated to its open state by the at least one command member (11, 14) upon a movement of said command member (11, 14) towards a position that commands the closure of at least one control valve (4) of the array of control valve(s) and/or upon a movement of the command member (11, 14) into a position that commands an unlocking or a separation of the respective coupling members (6, 7) of the quick-connection system.

3. Device according to Claim 1 or 2, **characterized in that** the purge member (8) is actuated necessarily and automatically to its open state by the at least one command member (11, 14) upon a movement of the movable command member (11, 14) into a position that commands the closure of at least one control valve of the array of control valve(s) and/or upon a movement of the movable command member (11, 14) into a position that commands an unlocking or a separation of the respective coupling members (6, 7) of the quick-connection system.

4. Device according to any one of Claims 1 to 3, **characterized in that** the at least one command member (11, 14) capable of actuating the purge member (8) comprises a button or lever (11) that is movable in translation and/or in rotation so as to command the opening/the closing of at least one control valve (4, 9) of the internal circuit (13) of the first valve (3) and/or of the second valve (5).

5. Device according to any one of Claims 1 to 4, **characterized in that** the at least one command member (11, 14) capable of actuating the purge member (8) comprises a member (14) that is movable in translation and/or in rotation so as to command the locking/the unlocking of the mechanical connection of the coupling members (6, 7) of the quick-connection system.

6. Device according to any one of Claims 1 to 5, **characterized in that** the internal circuit (13) of the first valve (3) extends between a first, upstream end (10) designed to be in communication with a source (2) of pressurized fluid and a downstream end (12), the internal circuit (13) of the first valve (3) comprising an isolation valve (4) for opening or closing the internal circuit (13), the second valve (5) being provided with an internal fluid circuit (15) comprising an upstream end designed to be in communication with the downstream end of the internal circuit (13) of the first valve (3) when the second valve (5) is coupled to the first valve (3) and a downstream, outlet end (25) designed to be connected to an apparatus that uses the fluid, the second valve (5) comprising a movable member (16) for actuating the isolation valve (4) of the first valve (3) so as to command the opening or the closing of the latter.

7. Device according to Claim 6, **characterized in that** the movement of the movable member (16) for actuating the isolation valve (4) of the first valve (3) is commanded by the at least one command member (11, 14).

8. Device according to any one of Claims 1 to 7, **characterized in that** it has a member (14) for locking/unlocking the mechanical connection of the coupling members (6, 7) of the quick-connection system, the locking/unlocking member (14) being movable relative to the first and second valves (3, 5) between a first, locking position and a second, unlocking position, in the first, locking position the locking member (14) preventing, when the two valves (3, 5) are coupled, the separation of the second valve (5) from the first valve, and in the second, unlocking position the locking/unlocking member (14) allowing, when the two valves (3, 5) are coupled, the separation of the second valve (5) from the first valve (3), said locking/unlocking member (14) constituting a command member (11, 14) actuating the purge member (8), the purge member (8) being actuated to its open state in the course of the movement of the locking/unlocking member (14) from its first position towards its second position and/or when the locking/unlocking member (14) reaches its second position.

9. Device according to Claim 8, **characterized in that** the purge member (8) may be actuated by the locking/unlocking member (14) by means of mechanical contact.

10. Device according to any one of Claims 1 to 9, **characterized in that** the at least one command member (11, 14) comprises a pivoting lever (11), and **in that** the purge member (8) may be actuated by means of mechanical contact with a portion of said lever (11).

11. Device according to Claim 10, **characterized in that** the purge member (8) may be actuated by the lever (11) in its travel between two specific positions of command of the array of control valve(s).

12. Device according to Claim 10 or 11, **characterized in that** the purge member (8) may be actuated by the lever (11) when the lever (11) is moved beyond its travel between two specific positions of command of the array of control valve(s).

13. Pressurized fluid cylinder or array of pressurized fluid cylinders provided with a device according to any one of Claims 1 to 12.
